# EUROPÄISCHE PATENTANMELDUNG

(11) **EP 0 753 264 A2**
(43) Veröffentlichungstag der Anmeldung: **15.01.1997**
(21) Anmeldenummer: 96111210.9
(22) Anmeldetag: 11.07.1996
(51) Int. Cl.: A23G 7/00, A23G 1/26, A23G 1/21, A23G 3/02

(54) **Beschickung eines wenigstens in einem Abschnitt permanent laufenden Fördermittels**

(30) Priorität: 12.07.1995 DE 19525436
(71) Anmelder: Winkler & Dünnebier Maschinenfabrik und Eisengiesserei KG, D-56564 Neuwied (DE)
(72) Erfinder: Rüegg, Hanno, 8280 Kreuzlingen (CH); Reinhardt, Lutz, 5675 Weissenthurm (DE)
(74) Vertreter: Alber, Norbert

(57) **Zusammenfassung**

Die Erfindung betrifft ein Verfahren und eine Vorrichtung zum Handhaben von Formenträgern, wobei der Endlosförderer für das Be- und Entladen im Ladetrum für begrenzte Zeit angehalten wird durch Vergrößerung einer Schlaufe im Endlosförderer vor dessen Ladetrum mit einer Geschwindigkeit, die die momentane Geschwindigkeit des Endlosförderers im Arbeitstrum kompensiert und analoger Verkleinerung einer letzten Schlaufe im Endlosförderer nach dessen Ladetrum mit der umgekehrt gleichen Geschwindigkeit wie der ersten Schlaufe.

## Beschreibung

Die Erfindung betrifft die Handhabung, insbesondere die Beschickung, von mit Formen gefüllten Formenträgern, welche mit Hilfe eines Endlosförderers im Kreis durch verschiedene Arbeits-Stationen geführt werden.

Als Endlosförderer wird dabei häufig ein Kettenförderer, bestehend aus zwei parallel im Abstand synchron laufenden, endlosen Ketten verwendet, zwischen welchen die Formenträger eingehängt und transportiert werden.

Derartige Anlagen werden z.B. häufig für die Herstellung von hohlen Schokolade-Teilen, etwa hohlen Schokolade-Hasen, eingesetzt. Die Formen weisen dann Formhohlräume auf, die unmittelbar vor dem Einsetzen der Form in den Formenträger mit einer definierten Menge an heißer, flüssiger Schokolade befüllt wurden, sodaß durch anschließendes Schwenken bzw. Rotieren der Form in den Arbeitsstationen des Arbeitstrums des Kettenförderers die Wände der Formhohlräume mit Schokolade benetzt werden können, was durch gleichzeitiges Abkühlen der Schokolade bzw. der Form die gewünschte hohle Schokoladen-Figur ergibt.

Dabei besteht das Problem, daß das naturgemäß getaktete Beschicken der Formenträger mit den Formen im Widerspruch zu dem kontinuierlichen, ruckfreien Lauf der Formenträger und damit des Kettenförderers im Arbeitstrum steht.

Gemäß der DE-PS 37 40 109 wird dies dadurch umgangen, daß zwischen die horizontale Anlieferung der neuen Formen und dem vertikal verlaufenden Ladetrum des Kettenförderers ein Paternoster zwischengeschaltet ist, der die horizontal angelieferten Formen aufnimmt und über eine begrenzte Strecke parallel und synchron zum Ladetrum bewegt, sodaß während dessen ein horizontales Hinüberschieben der Form vom Paternoster in einen im Ladetrum befindlichen Formenträger ruckfrei möglich ist.

Bei dieser Lösung waren die Formenträger bezüglich des Kettenförderers bereits frei drehbar zur Durchführung der notwendigen Schwenkbewegungen während des Durchlaufens des Arbeitstrums, und wurden lediglich im Verlauf des Ladetrums in einer solchen definierten Schwenklage geführt, daß die Halterungen für die Formen in dem Formenträger mit der horizontale Einschub-Richtung der Formen fluchteten.

Die vorbeschriebene Aufgabe wird durch die Merkmale der Ansprüche 1 bzw. 13 gelöst. Vorteilhafte Ausführungsformen ergeben sich aus den Unteransprüchen.

Prinzipiell ist es zwar aus der DE-OS 42 02 897 bekannt, einen endlosen Kettenförderer in ein kontinuierlich laufendes Trum sowie ein getaktetes Trum durch dazwischen angeordnete Schlaufenbildner zu unterteilen. Dies wurde dort jedoch nicht mit frei drehbaren Formenträgern durchgeführt, und die Formenträger durchliefen die Schlaufen auch nicht bei Schlaufengröße Null.

Damit ist eine Kombination der beiden vorgenannten Schriften nicht ohne weiteres möglich.

Dadurch, daß die Geschwindigkeiten der Schlaufenbildung über alle Schlaufenbildner des gesamten Kettenförderers zu jedem Zeitpunkt in der Summe Null beträgt, ist einerseits der konstante Lauf des Kettenförderers im Arbeitstrum gegeben, anderseits jedoch das Vorgeben einer anderen Geschwindigkeit in einem der anderen Trume möglich, etwa der Geschwindigkeit Null, wenn die vor und hinter diesem Trum jeweils anschließenden Schlaufenbildner eine umgekehrt gleich große Geschwindigkeit aufweisen.

Weiterhin ist nicht nur grundsätzlich die Beseitigung jeder dieser Schlaufen auf die Größe Null möglich, sondern mit Hilfe einer entsprechenden Steuerung können eine oder mehrere der auf das kontinuierlich laufende Arbeitstrum in Transportrichtung folgenden Schlaufen - in Abhängigkeit von der Arbeitsgeschwindigkeit, dem Abstand der Formenträger entlang des Kettenförderers und anderer Parameter - zeitlich genau während des Durchlaufens eines Formenträgers auf die Größe Null gefahren, also vollständig beseitigt werden.

Dies ermöglicht bei Formenträgern, deren definierte Schwenklage durch Führung von seitlich aus den Formenträgern abstehenden Führungsrollen aufrechterhalten wird, einen Durchlauf des Formenträgers ohne Änderung dieser definierten Schwenklage.

Die Alternative hierzu wäre, die Formenträger durchaus eine momentan vorhandene Schlaufe durchlaufen zu lassen, dabei jedoch die Führung für die Führungsrollen der Formenträger quer zum Kettenförderers analog zum Kettenförderer auszulenken und somit flexibel zu gestalten. Diese Lösung erfordert jedoch einen hohen baulichen Aufwand und ist überdies meist sehr störanfällig.

Je nach der Anzahl der insgesamt im Kettenförderer vorhandenen Schlaufenbildner und auch in Abhängigkeit von anderen Parametern ist es in der Regel etwa ab dem dritten Schlaufenbildner nicht mehr möglich, die Vergrößerung und Verkleinerung der Schlaufen in Relation zueinander so zu steuern, daß alle Schlaufen beim Durchgang eines Formenträgers gerade die Größe Null haben.

Für diesen Fall ist der entsprechende Schlaufenbildner als doppelter Schlaufenbildner ausgebildet, indem er aus zwei hintereinander angeordneten Schlaufenbildnern besteht, die zusammen lediglich in der Summe den Betrag der an dieser Stelle notwendigen Schlaufengröße aufbringen müssen. Dadurch ist es möglich, bei Annäherung eines Formenträgers an diesen doppelten Schlaufenbildner die erste Teilschlaufe zu beseitigen, sodaß ein Durchlauf des Formenträgers durch die erste Teilschlaufe problemlos möglich ist. Die zweite Teilschlaufe muß dabei den Gesamtbetrag der notwendigen Schlaufengröße alleine aufbringen.

Anschließend wird die zweite Teilschlaufe für den Durchgang des Formenträgers auf Größe Null gefahren, so daß nun die notwendige Gesamt-Schlaufengröße alleine von der ersten Teilschlaufe realisiert werden muß, und somit auch die durch die Null-Verstellung der zweiten Teilschlaufe freiwerdende Länge des Kettenförderers aufgenommen werden muß.

In der Regel will man bei einem solchen endlosen Kettenförderer nicht nur den Abstand zwischen den beiden am weitesten voneinander entfernten Umlenkrollen als Arbeitstrum zur Verfügung haben. Deshalb wird ein endloser Kettenförderer nicht am einen Ende beladen und am anderen Ende entladen, wodurch das Rücktrum funktionslos wäre und sich eine sehr große Baulänge der Anlage ergeben würde, sondern die Entladung und die Beladung erfolgen unmittelbar hintereinander an fast derselben Stelle des endlosen Kettenförderers.

Um den baulichen Aufwand für die Zuführung und Abführung der Formen in bzw. aus den Formenträgern des Kettenförderers, welche vorzugsweise im wesentlichen horizontal geschieht, möglichst gering zu halten, wird hierfür eine fixe Entladeposition und Beladeposition im Bereich des Ladetrums festgelegt.

Der Abstand - in Förderrichtung betrachtet - dieser beiden Positionen kann beispielsweise einem Abstand der Halterungen für die Formen innerhalb der Formenträger entsprechen. Bei gleichzeitiger Beladung und Entladung jeweils einer Form wird jedoch - z.B. beim Beladen der letzten Halterung eines neu zu füllenden Formenträgers - der gleichzeitig stattfindende Entlade-Vorgang bereits am nächsten Formenträger vollzogen.

Dies funktioniert jedoch nur dann, wenn dabei diese beiden Formenträger einen solchen Abstand entlang des Kettenförderers besitzen, daß die bei der gleichzeitigen Be- und Entladung beteiligten Halterungen dieser beiden Formenträger zu diesem Zeitpunkt einen Abstand und eine Position entsprechend der fixen Beladeposition und Entladeposition haben.

Da innerhalb eines Formenträgers jedoch die insgesamt vorhandenen Halterungen - je nach momentaner Arbeits-Aufgabe - unterschiedlich eingesetzt werden, und damit die Formenträger mit unterschiedlicher Anzahl von Formen und damit unterschiedlichen Abständen der Formen zueinander bestückt sind, läßt sich dieses Erfordernis seitens des Abstandes der Formenträger entlang des Kettenförderers nicht einhalten, da ein Umsetzen der Formenträger innerhalb des Kettenförderers unzumutbar ist.

Aus diesem Grund wird innerhalb des Ladetrums zwischen der Beladeposition und Entladeposition zusätzlich eine weitere Schlaufenbildung vorgesehen, um den Abstand und die Position zweier momentan im Ladevorgang befindlicher Formenträger separat steuern zu können, da sich diese dabei nun in den getrennten Teilen des Ladetrums, also dem Beladetrum beziehungsweise Entladetrum, befinden.

Um dabei den Einfluß der Längung der Kette zwischen der Stelle des Antriebs und der zu positionierenden Stelle der Kette möglichst gering zu halten, verfügt jedes Trum des Kettenförderers über einen Antrieb, wobei der Antrieb möglichst immer am stromabwärts liegenden Ende dieses Trums angeordnet ist, und damit jedes Trum auf Zug beansprucht wird.

Die Formenträger werden innerhalb des Arbeitstrums in der Regel nicht permanent in einer definierten Schwenklage gehalten. Vor dem Erreichen des Ladetrums muß die für den Ladevorgang notwendige definierte Schwenklage jedoch unbedingt wieder hergestellt werden.

Dies wird erreicht, indem jeder Formenträgers ein zwischen den Ketten des Kettenförderers angeordnetes Schwenkgetriebe umfaßt, aus welchem beidseits fluchtend Ketten-Zapfen in Richtung auf die Ketten hervorstehen. Mit diesen Ketten-Zapfen ist der Formenträger damit fest, aber frei drehbar in dem Kettenförderer aufgenommen. Die Verbindungslinie dieser beiden Ketten-Zapfen bildet die erste Rotationsachse des Schwenkgetriebes und damit des Formenträgers.

Aus dem Schwenkgetriebe stehen weiterhin rechtwinklig zu dieser ersten Rotationsachse und in der Mitte zwischen den Ketten des Kettenförderers Teilträger-Zapfen hervor, die gegenüber dem Schwenkgetriebe drehbar angeordnet sind und jeweils einen Teilträger tragen, in dem die Halterungen für die Formen untergebracht sind. Die Verbindungslinie der beiden Teilträger-Zapfen stellt die zweite Rotationsachse des Schwenkgetriebes und damit des Formenträgers dar.

Der definierte Antrieb des Formenträgers um diese beiden Rotationsachsen während des Durchlaufens bestimmter Bereiche des Arbeitstrums erfolgt über den Antrieb von beidseits am Schwenkgetriebe angeordneten Schwenkritzeln, die koaxial zu den Ketten-Zapfen, aber demgegenüber zum Schwenkgetriebe hin versetzt, und damit innerhalb der Ketten liegen. Jedes dieser beiden Schwenkritzel nimmt Einfluß auf eine Drehung des Schwenkgetriebes und damit des Formenträgers um eine der beiden Rotationsachsen.

Während das eine Schwenkritzel eine gleichzeitige Drehung um die erste und die zweite Rotationsachse bewirkt, bewirkt das andere Schwenkritzel nur eine Drehung z.B. um die zweite Rotationsachse, sodaß die Differenzgeschwindigkeit der beiden Schwenkritzel eine Drehung nur um die erste Rotationsachse bewirken kann.

In den Bereichen des Arbeitstrums, in denen definierte Schwenkbewegungen der Formenträger notwendig sind, sind parallel zu den Ketten des Kettenförderers Schwenktrieb-Ketten so angeordnet und separat steuerbar, daß von ihnen jeweils das gewünschte Schwenkritzel des sich in diesem Bereich befindlichen Formenträgers angetrieben wird.

Damit lassen sich auch sehr komplexe Schwenkbewegungen exakt steuern. Somit ist es auch möglich, annähernd geschlossene Schokoladen-Hohlkörper herzustellen, indem bereits vor dem Einfüllen der flüssigen Schokolade die Formhohlräume gebildet werden, etwa durch Zusammenfügen von Oberteil und Unterteil der Form. Dabei ist im Oberteil lediglich eine Einfüllöffnung für die Schokolade vorhanden, über die nun das Einbringen der Schokolade erfolgt.

Gegenüber der bisherigen Methode, zunächst in das Unterteil der Form die flüssige Schokolade einzubringen, und erst danach das Oberteil der Form möglichst ohne ungewollte Bewegung des Unterteiles aufzusetzen, bietet dies erhebliche Handling Vorteile. Allerdings muß bei den nun folgenden Schwenkbewegungen so genau gearbeitet werden, daß die flüssige Schokolade niemals die permanent offene Einfüllöffnung erreicht, aber ansonsten die gesamte Oberfläche des Formhohlraumes benetzt, solange die Schokolade noch nicht vollständig erstarrt ist.

Dies ist vor allem vorteilhaft, wenn Schokoladenhohlkörper mit einer anschließenden, permanent flüssig bleibenden Füllung gefüllt werden sollen. Bei konventioneller Herstellung wie oben beschrieben muß zunächst der Hohlkörper aus Schokolade hergestellt, das Oberteil der Form abgenommen und in den hohlen Schokoladenkörper ein Loch als Einfüllöffnung für die flüssige Füllung eingebracht werden. Dabei kommt es häufig zum Bruch des hohlen und damit relativ instabilen Schokoladen-Hohlkörpers, oder dieser wird beim Abheben mit dem Formenoberteil abgehoben, was ebenfalls sehr nachteilig ist.

Bei der erfindungsgemäßen Vorgehensweise wird die Einfüllöffnung bereits bei der Erstellung des Schokoladenhohlkörpers aufgrund der gezielt durchgeführten Schwenkbewegungen offengelassen, so daß ein Einbringen der flüssigen Füllung jederzeit und auch ohne Abnehmen des Oberteiles der Form möglich ist.

Nachdem die Schokolade in den Formhohlräumen ihre Fließfähigkeit weitgehend verloren hat, läßt man die Formenträger unkontrolliert, aber ggfs. unter Einwirkung der Schwenktrieb-Ketten auf die Schwenkritzel, weiter rotieren, während dessen die Schokolade ihre Entnahme-Temperatur erreicht, was kurz vor Erreichen des Entladetrums der Fall ist.

Um nun die Formenträger wieder in eine definierte Schwenklage "einfangen" zu können, stehen aus dem Schwenkgetriebe seitlich, zur Kette in, Führungsrollen vor, die durch entsprechende, parallel zur Ebene der Ketten des Kettenförderers fest angeordnete, Führungsschienen so geführt werden, daß die Drehlage um die beiden Rotationsachsen beim Erreichen der Ladepositionen die gewünschte Soll-Lage einnimmt. Analoges gilt für die weiteren, aus wenigstens einem der Teilträger radial vorstehenden weiteren Führungsrollen.

Bei Anordnung von mehr als einer Führungsrolle pro Teilträger bzw. Seite des Schwenkgetriebes kann zusätzlich die Anordnung einer weiteren körperlichen Markierung notwendig sein, um vor Beginn des Kontaktes zwischen Führungsrolle und Führungsschiene die gewünschte von zwei möglichen Drehlagen vor Beginn der Führungsschienen durch eine Ausricht-Einheit, die z.B. eine Richtkette umfaßt, festzulegen.

Da die Formenträger die Schlaufenbildner bei einer Schlaufengröße gleich Null durchlaufen sollen, verlaufen die Führungsschienen im Bereich der Schlaufenbildner geradlinig, also ohne eine Schlaufe nachzuvollziehen.

Die Schlaufenbildner, und auch die einzelnen Teil-Schlaufenbildner des doppelten Schlaufenbildners, sind wie folgt aufgebaut:

Zwischen zwei in Förderrichtung beanstandeten, ortsfesten Umlenkritzeln ist ein Tänzerrad auf der gegenüberliegenden Seite der Kette angeordnet, welches quer zur Ebene der endlosen Kette z.B. mittels eines Pneumatikzylinders soweit gegen die Kette bewegbar ist, daß hierdurch eine in ihrer Größe veränderbare Schlaufe der Kette gebildet wird. Dies geschieht natürlich immer parallel identisch an den beiden parallelen Ketten des Kettenförderers.

Die Paare von Pneumatikzylindern können dabei unabhängig voneinander gesteuert werden. Normalerweise wird dabei lediglich gewechselt zwischen Beaufschlagung mit Arbeitsdruck und Umschalten auf drucklos. Da die momentane Geschwindigkeit der Ketten innerhalb jedes der Trume durch den in jedem Trum vorhandenen Antrieb vorgegeben wird, bilden die Pneumatikzylinder die hierfür notwendigen Schlaufen auf diese Art und Weise automatisch und mit der richtigen Kettenspannung aus.

Eine Ausführungsform gemäß der Erfindung ist im folgenden anhand der Figuren beispielhaft näher erläutert. Es zeigen:
- Figur 1:: eine Seitenansicht des Kettenförderers,
- Figuren 2:: Darstellungen zu den einzelnen Lade-Phasen,
- Figur 3:: eine Aufsicht auf einen Formenträger,
- Figur 4:: eine Ansicht des Formenträgers der Figur 3 in Blickrichtung der Kette,
- Figur 5:: eine Seitenansicht dieses Formenträgers und
- Figur 6:: eine Seitenansicht der Ausrichteinheit.

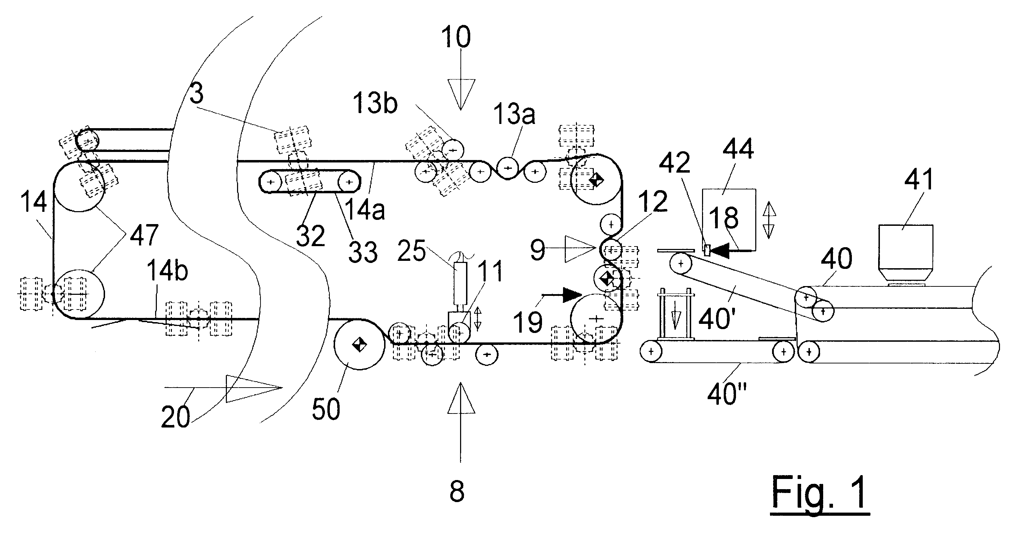

Fig. 1 zeigt eine Anlage zum Gießen hohler Schokolade-Figuren, an welcher die Erfindung verwirklicht ist, in der Seitenansicht. Von den beiden Ketten des Kettenförderers 1, die die Formenträger 2 transportieren, ist in der Blickrichtung der Fig. 1 wegen der fluchtenden Lage hintereinander, nur eine zu erkennen.

Bei dieser Anlage liegen die einzelnen, leeren Formen 3 auf einer Endloskelle 40 auf, und werden damit unter der Füllstation hindurchgeführt, wobei flüssige Schokolade in die Formhohlräume der Form 3 über eine kleine Einfüllöffnung in jeden der Formhohlräume eingebracht wird.

Es können jedoch ebenso an der Oberseite vollständig offene Formen verwendet werden, die z.B. auch statt im Punktguß im Bandguß gefüllt werden, wofür während des Gießens eine Relativbewegung zwischen der Füllstation 41 und der Endloskette 40 erreicht werden muß.

Die gefüllten Formen werden danach z.B. mittels eines schräg nach oben führenden Kettenförderers 40' zur Beladeposition 18 transportiert und dort etwa waagerecht abgelegt. Sobald dies geschehen ist, senkt sich der Beladeschieber 42, der an einem vertikal verfahrbaren Schieberschlitten 44 befestigt ist, von oben herab, bis er in der in Fig. 1 dargestellten Lage, also auf gleicher Höhe mit der abgelegten Form 3, ist.

Sobald sich nun eine Halterung 6 eines Formenträgers 2, welcher mit Hilfe des Ladetrums des Kettenförderers 1 genau in dieser Position angehalten wurde, fluchtend gegenüber befindet, wird die abgelegte Form 3 mittels des Beladeschiebers 42 in diese Halterung 6 hinüber geschoben.

Analoges geschieht an dem vertikal verlaufenden Ladetrum zum Entladen:

Dort ist - diesmal innerhalb des Kettenförderers 1 - ein wiederum horizontal bewegbarer Entladeschieber 43 auf der Höhe der Entladeposition 19 angeordnet, der an dieser Stelle die Form 3 aus der Halterung des Formenträgers 2 herausschiebt in einen außerhalb des Kettenförderers angeordnet Ablage-Mechanismus 46, welcher die entnommenen Formen 3 mit erstarrter Schokolade zum Weterverarbeiten, insbesondere zum Entleeren weiterleitet.

In Fig. 1 ist zu erkennen, daß das Arbeitstrum 14 des Kettenförderers 1, welches den Hauptteil dessen Länge ausmacht, vom Ladetrum durch einen unteren Schlaufenbildner 8 sowie einen oberen, doppelten Schlaufenbildner 10 getrennt ist, welche das zeitlich begrenzte Anhalten des Kettenförderers im Ladetrum ermöglichen. Das Ladetrum selbst ist durch einen mittleren Schlaufenbildner 9 in ein in Förderrichtung 20 vorangehendes Entladetrum 15 und ein unmittelbar daran anschließendes Beladetrum 16 unterteilt. Dieser Schlaufenbildner 9 befindet sich dabei etwa im Bereich der Lade-Positionen.

Das Arbeitstrum 14 des Kettenförderers 1 besteht dabei aus einem oberen Teilbereich 14 a, der vom oberen Schlaufenbildner 10 bis zum Wendepunkt 47 des Arbeitstrums 14 am linken Bildrand der Fig. 1 reicht. Der zweite Teilbereich 14 b verläuft unter dem ersten Teilbereich 14 a zurück zum Beginn des Entladetrums 15, also dem unteren Schlaufenbildner 8. Die beiden Teilbereiche 14 a, b sind durch nicht dargestellte Belüftungs-Gitter 48 thermisch getrennt.

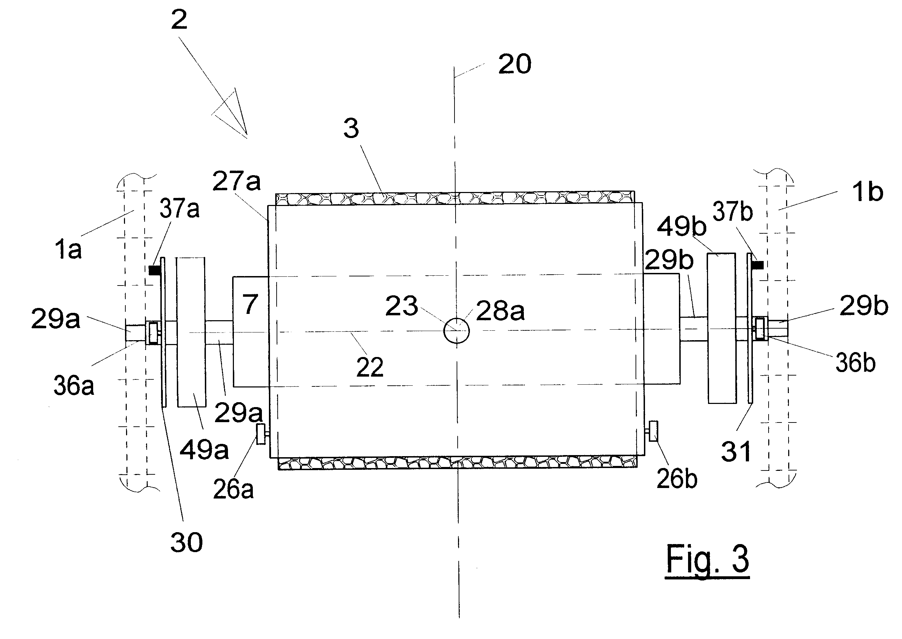

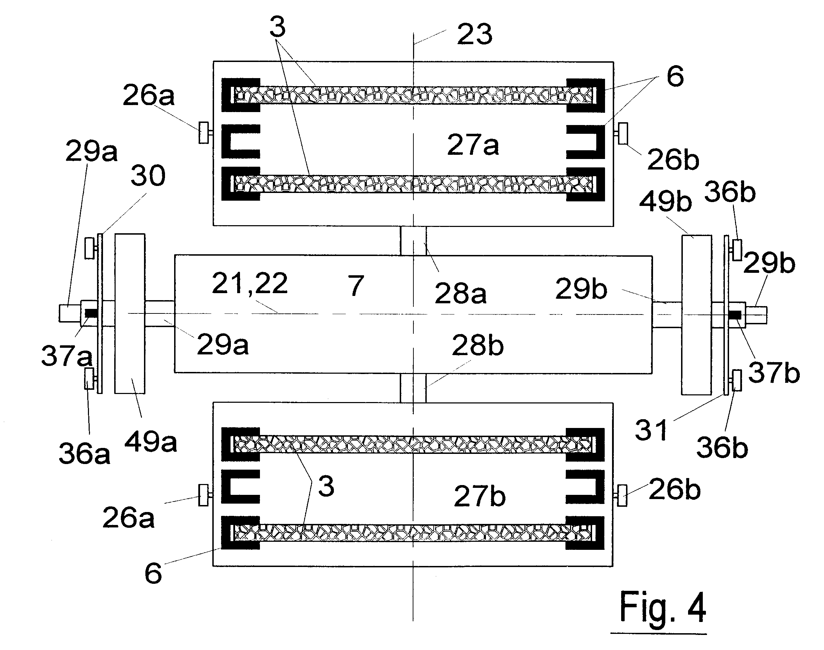

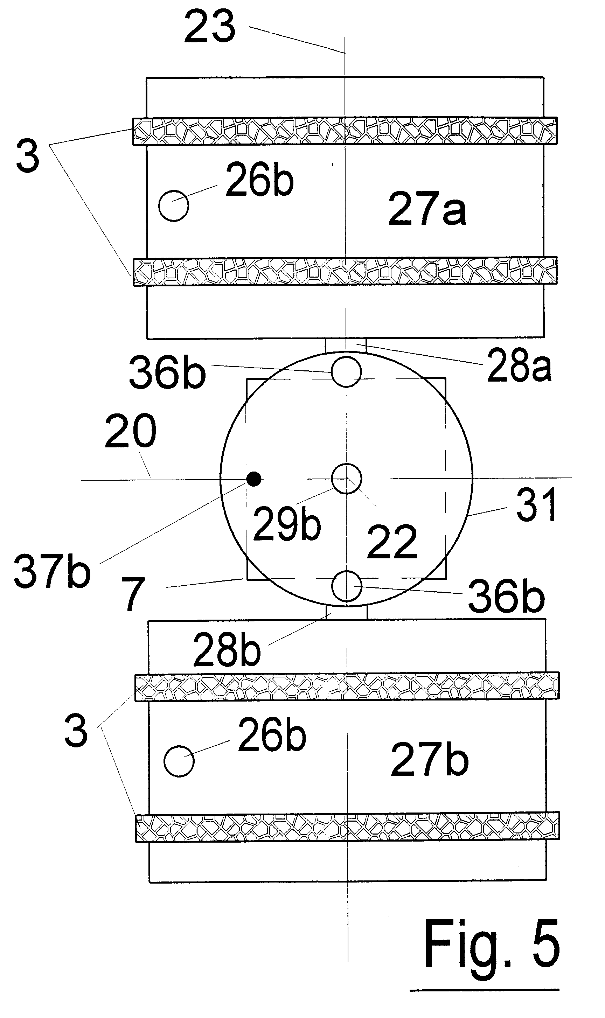

Während des Durchlaufes der Formenträger 2 durch das Arbeitstrum 14 rotieren diese um eine oder beide ihrer Rotationsachsen, die im folgenden anhand der Figuren 3 bis 5 näher erläutert werden. Davon zeigt Fig. 3 einen Formenträger 2 in der Aufsicht, wobei die beiden den Formenträger 2 zwischen sich tragenden Ketten 1a, b gestrichelt darstellt sind, während die Figuren 4 und 5 diesen Formenträger 2 in den Seitenansichten zeigen, und zwar in Fig. 4 in Förderrichtung 20 betrachtet, und in Fig. 5 quer zu dieser Förderrichtung in Schnittdarstellung.

Fig. 4 zeigt, daß sich im Zentrum des Formenträgers 2 dessen Schwenkgetriebe 7 befindet, welches balkenförmig gestaltet ist und aus dessen seitlichen Stirnflächen beidseits fluchtend die Ketten-Zapfen 29 a, b am weitesten vorstehen, die die erste Rotationsachse 22 des Formenträgers bilden. Aus zwei gegenüberliegenden Längsseiten des Schwenkgetriebes 7 stehen mittig und zueinander fluchtend zwei weitere Zapfen, die Teilträger-Zapfen 28 a, b hervor, die jeweils einen der beiden Teilträger 27 a, b tragen. Diese Teilträger-Zapfen 28 bilden die zweite Rotationsachse 23 des Formenträgers 2 und sind gegenüber dem Schwenkgetriebe 7 drehbar gelagert.

In jedem der Teilträger 27 a, b sind mehrere schienenförmige Halterungen 6, insbesondere in Ebenen parallel zur ersten Rotationsachse 22, zur Aufnahme von plattenförmigen Formen 3 in Ebenen parallel zur zweiten Rotationsachse 22 vorhanden.

Wie in der Aufsicht der Fig. 3 zu erkennen, sind die Teilträger 27 a, b weniger breit als das Schwenkgetriebe 7, und selbst die Diagonale des Teilträgers mit eingeschobenen Formen 3 ist in der Aufsicht der Fig. 3 kürzer als der lichte Abstand der seitlich außerhalb des Schwenkgetriebes 7 angeordnet Schwenkritzel 30, 31, sodaß ein vollständiges Rotieren der Teilträger 27 a, b um die zweite Rotationsachse 23 möglich ist.

Die Drehung dieser beiden Schwenkritzel 30, 31, die fluchtend zu der ersten Rotationsachse 22 angeordnet sind, bewirkt eine Drehung des Formenträgers 2 um dessen Rotationsachsen 22, 23.

Während das eine Schwenkritzel 30 eine gleichzeitige Drehung um die erste und die zweite Rotationsachse 22 und 23 bewirkt, bewirkt das andere Schwenkritzel 31 nur eine Drehung um die zweite Rotationsachse 23, sodaß eine bestimmte Differenzgeschwindigkeit der beiden Schwenkritzel 30, 31 eine Drehung nur um die erste Rotationsachse 22 bewirkt.

Durch separaten Antrieb dieser beiden Schwenkritzel 30, 31 mittels in Fig. 1 darstellter Schwenktrieb-Ketten 32, 33, die mit jeweils einem Trum abschnittweise parallel zu den Ketten 1a, b des Kettenförderers 1 verlaufen, kann somit jede gewünschte rotierende Bewegung oder Taumel-Bewegung des Formenträgers 2 und damit der Formen 3 erreicht werden.

Über bestimmte Bereiche des Arbeitstrums 14 des Kettenförderers 1 müssen die Formenträger 2 jedoch nur in einer bestimmten Lage gehalten und weiter transportiert werden. Hierfür ebenfalls Schwenktrieb-Ketten vorzusehen, die diese Schwenklage durch parallelen, synchronen Lauf mit dem Kettenförderer beibehalten, wäre zu aufwendig. Deshalb weisen sowohl das Schwenkgetriebe 7, insbesondere dessen Schwenkritzel 30, 31, als auch wenigstens einer der Teilträger 27a, 27b seitlich beidseits in Richtung auf die Ketten 1a, b vorstehende Führungsrollen 26a, 26b, 36a, 36b auf.

Dabei werden diese Führungsrollen von fest an der Anlage montierten Führungsschienen 35a,b abschnittweise so geführt, daß die durchlaufenden Formenträger 2 eine konstante Schwenklage beibehalten oder diese nur geringfügig ändern können. Die Führungsschienen 35 sind in Fig. 1 darstellt.

Die Führungsrollen 36 a, b des Schwenkgetriebes 7 sind auf jeweils der Aussenseite einer koaxial zur ersten Rotationsachse 23 außerhalb der Tragscheiben 49a, 49b, aber innerhalb der Ketten 1a, b, drehfest mit dem Gehäuse des Schwenkgetriebes 7 verbundenen Schwenkritzel 30, 31 außermittig und nach außen weisend angeordnet.

Auch von den beiden Teilträgern 27 a, b stehen radial auf gegenüberliegenden Seiten solche Führungsrollen 26 a, b ab, die damit jedoch weiter innen liegen als die äußeren Führungsrollen 36 a, b und auch nur dann exakt senkrecht in Richtung der Ebene der Ketten 1a, b weisen, wenn die Teilträger 27 a, b zuvor in die hierfür richtige Drehlage gebracht wurde.

Da die Formenträger vor Beginn der Führung mittels der Führungsschienen 35a,b frei rotieren sollen zur vollständigen Aushärtung der Schokolade, und sich die einander entsprechenden Führungsrollen bezüglich der jeweiligen Rotationsachse einander gegenüber liegen, wären trotz der Führung durch die Führungsschienen immer jeweils zwei verschiedene, um 180° versetzte, Positionen möglich.

Um dies auf eine einzige exakt definierte Drehlage zu begrenzen, sind zusätzlich auf jedem der beiden Schwenkritzel 30, 31 wiederum außermittig und wie die äußeren Führungsrollen 36 a, b nach außen weisend, Marken 37 a, b in Form z.B. eines Stiftes angeordnet, die erfasst und zur Positionierung benutzt werden können.

Je nachdem, ob die beiden runden, zu den Schwenkritzeln koaxialen, Tragscheiben 49 beide drehfest mit dem Gehäuse des Schwenkgetriebes 7 verbunden sind, oder ob wenigstens eine dieser Tragscheiben 49 a, b drehfest mit ihrem benachbarten Schwenkritzel 30, 31 drehfest verbunden ist, wären auch analoge Marken an den Teilträgern 27 a, b notwendig.

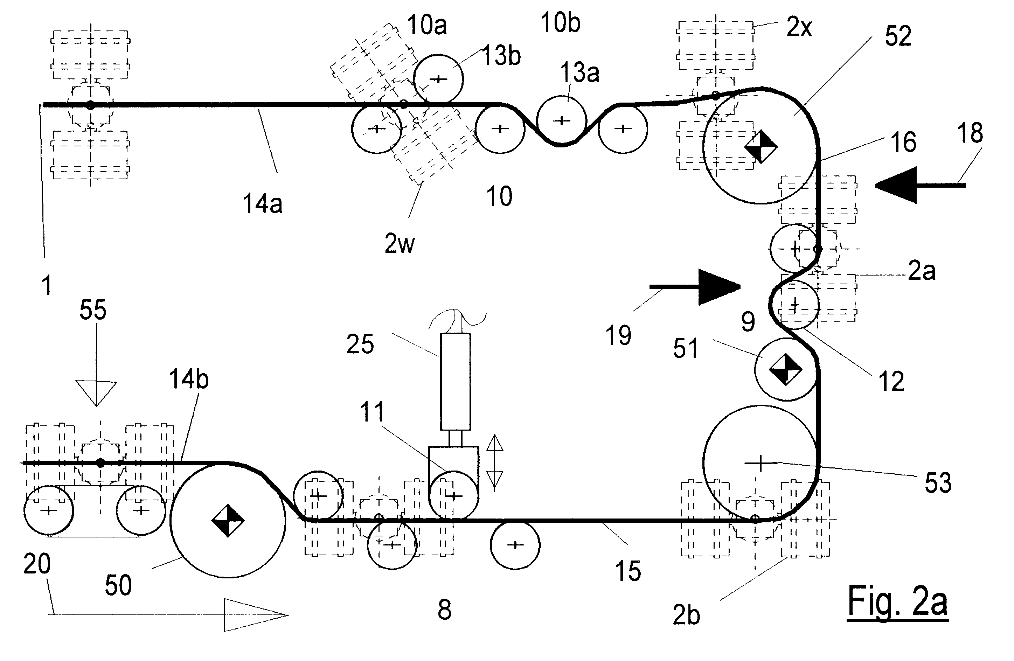

Die Figuren 2a bis 2d zeigen nun die bei einem Formenträger 2, der jeweils mit vier Formen 3 bestückt ist, notwendigen vier Takte, die für das vollständige Beladen eines solchen Formenträgers notwendig sind, in einer vergrößerten Detaildarstellung des Ladetrums des Kettenförderers 1. Daß im kontinuierlichen Betrieb der Anlage jede neu beschickte Halterung 6 zuvor entladen werden muß, wird in der folgenden Beschreibung nicht jeweils separat erwähnt.

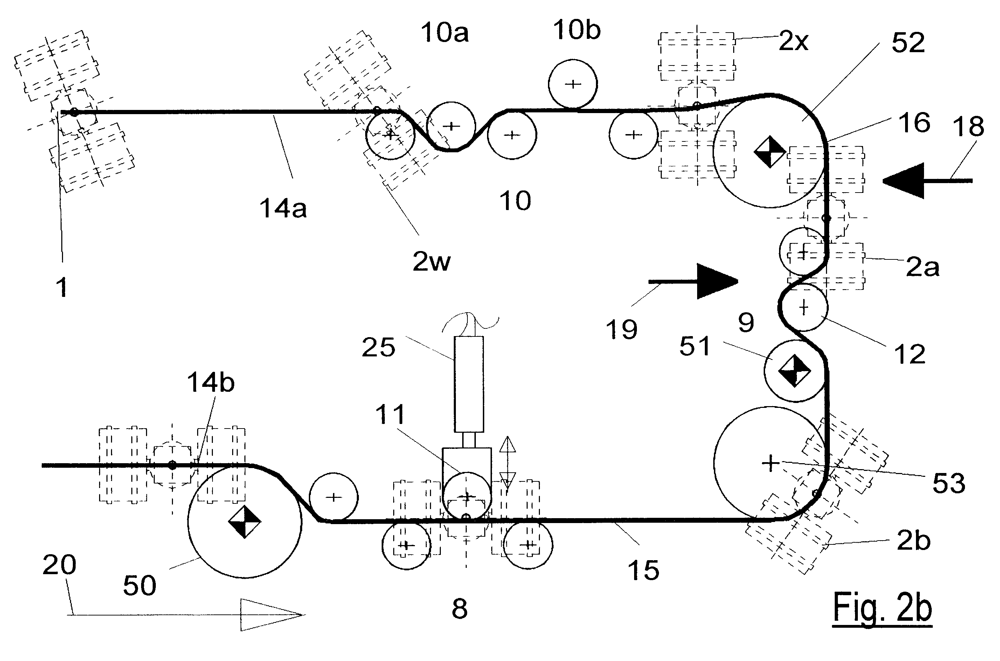

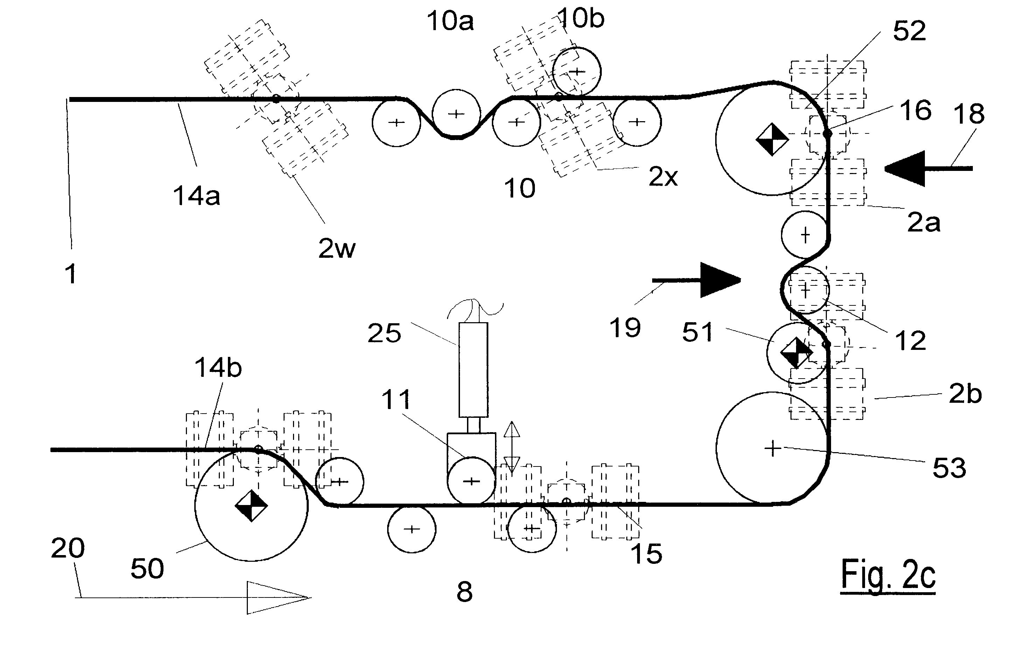

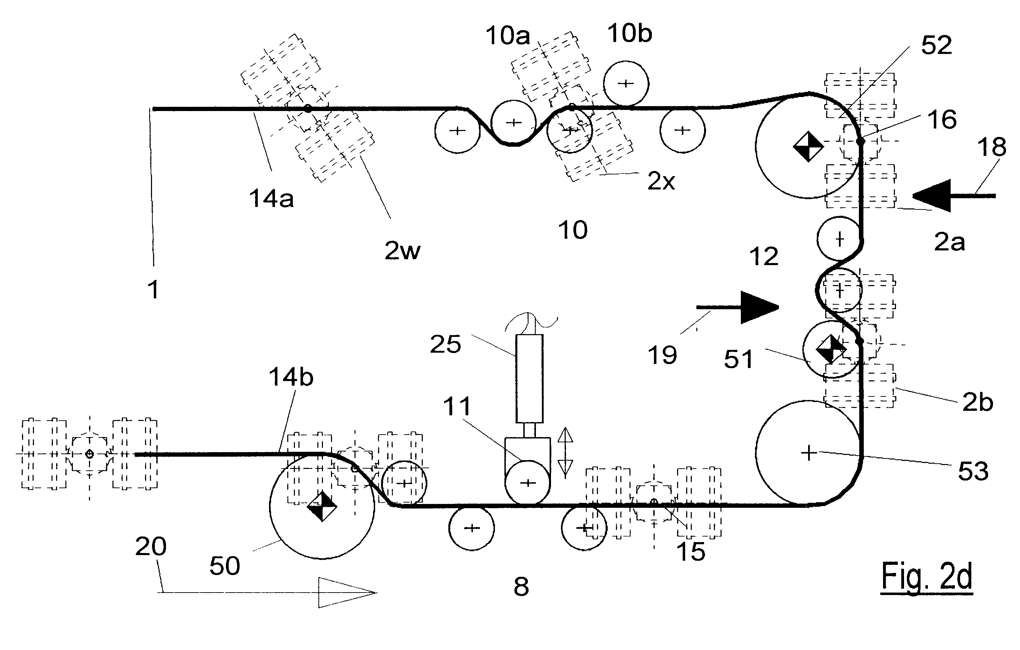

Der in den Figuren 2 dargestellte Teil der Anlage gemäß Fig. 1 umfaßt - in Förderrichtung 20 fortlaufend - einen unteren, horizontalen Bereich, einen vertikal nach oben führenden Bereich und einen oberen horizontalen Bereich.

Im unteren vertikalen Bereich endet der Teilbereich 14 b des Arbeitstrums mit Erreichen der Ausrichteinheit 55, die dem unteren Schlaufenbildner 8 vorangeht. Unmittelbar vorher kämmt mit dem Kettenförderer 1 ein Antriebsritzel 50, welches somit am Ende des Arbeitstrums 14 dieses ziehend antreibt.

Zwischen diesem Antriebsritzel 50 und dem Umlenkritzel 53 zum vertikalen Bereich ist der untere Schlaufenbildner 8 angeordnet, dessen Funktion und Aufbau bereits beschrieben wurde. Stellvertretend für alle Schlaufenbildner ist in den Figuren 2 nur bei diesem Schlaufenbildner 8 der für die Querverschiebung eingesetzte Pneumatikzylinder 25 dargestellt.

Im vertikalen Bereich der Figuren 2 ist - eher im unteren Teil - der mittlere Schlaufenbildner 9 angeordnet. Dessen in Förderrichtung erste, ortsfeste Umlenkrolle ist als Antriebsritzel 51 ausgebildet, welches damit das vom unteren Schlaufenbildner 8 bis zum mittleren Schlaufenbildner 9 reichende Entladetrum 15 ziehend antreibt.

Der mittlere Schlaufenbildner 9 ist der Beginn des Beladetrums 16, welches am oberen, doppelten Schlaufenbildner 10, der unmittelbar nach Beginn des oberen vertikalen Bereiches des Kettenförderers 1 angeordnet ist, endet. Deshalb ist das Umlenkritzel zwischen dem vertikalen und dem oberen horizontalen Bereich als Antriebsritzel 52 für das Entladetrum 16 ausgebildet, welches wiederum ziehend wirkt, und der Einfluß der Längung des Kettenförderers innerhalb der einzelnen Trume minimiert wird.

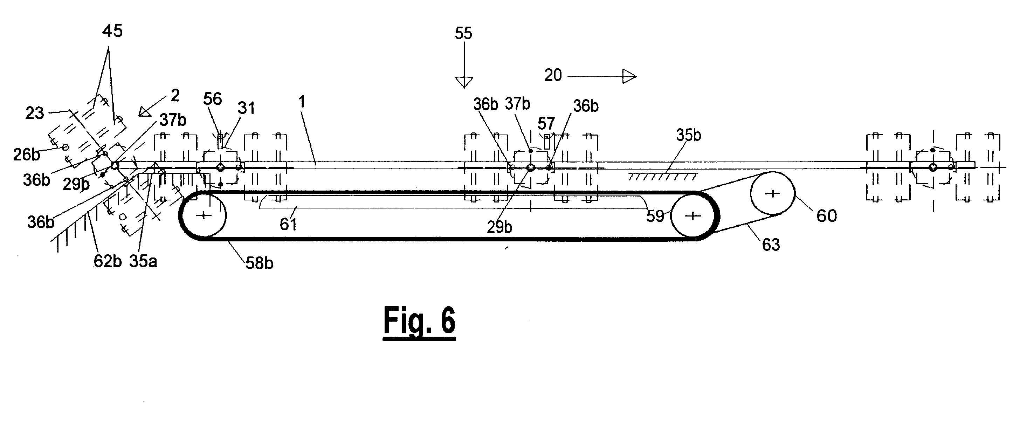

Es ist ferner zu erkennen, daß die Formenträger 2 bereits ab dem Ende des Arbeitstrums 14 - wegen der in Fig. 6 näher erläuterten Ausrichteinheit - eine Drehlage einnehmen, bei der z.B. die zweite Rotationsachse 23 parallel zur momentan Förderrichtung 20, also etwa parallel zur jeweiligen Richtung des Kettenförderers 1, liegt.

In Fig. 2a befindet sich im vertikalen Bereich ein Formenträger 2a in einer solchen Höhenlage, daß seine oberste benutzte Halterung 6a an der Beladeposition 18 steht und mit einer frisch gefüllten Form 3 beschickt werden kann. Die Ketten-Zapfen 29 des Formenträgers 2a befinden sich dabei noch im Bereich des mittleren Schlaufenbildners 9, den sie soeben bei Schlaufengröße Null durchlaufen haben, jedoch bereits an der in Förderrichtung zweiten Umlenkritzel an einem Punkt, dessen Position durch Veränderung der Größe der Schlaufe in diesem mittleren Schlaufenbildner 9 nicht mehr beeinflusst wird.

Gleichzeitig befindet sich die Halterung 6c des gleichen Formenträgers 2a auf Entladeposition 19, da je zwei der vier Halterungen 6a bis 6d dieses Formenträgers in je einem der beiden Teilträger 27 a, b angeordnet sind, und der Abstand von Beladeposition 18 und Entladeposition 19 dem Abstand der Halterungen 6a zu 6c bzw. 6b zu 6d entspricht, sodaß aus der Haltung 6c die Form zeitgleich entnommen werden kann.

Für das Anfahren der nächsten Takt-Stellung wird der Formenträger 2a im Entladetrum 16 um den Abstand seiner Halterungen 6a und 6b weiter Verfahren und dann wieder angehalten zum Beladen der Halterung 6b und Entladen der Halterung 6d, wie in Fig. 2b zu sehen.

Für das Anfahren der dritten Takt-Stellung (Fig. 2c) wird der Formenträger 2a im Entladetrum rechten nun um den Abstand seiner Halterungen 6b und 6c weiter bewegt, um die Haltung 6c in die Entladeposition 18 zu bringen. Gleichzeitig wird mit Hilfe des separat gesteuerten Entladetrums 15 der nachfolgende Formenträger 2b soweit verfahren, bis sich dessen erste Halterung 6a auf Entladeposition 19 befindet. Der Verfahrweg hierfür hängt von dem gegenseitigen Abstand der Formenträger 2a und 2b im Kettenförderer 1 ab.

Da dieser in der Regel größer ist als der Abstand von Beladeposition 18 und Entladeposition 19, muß hierfür eine Annäherung dieser beiden Formenträger 2a und 2b stattfinden, was durch Vergrößerung der Schlaufe im mittleren Schlaufenbildner 9 erfolgt.

Für das Anfahren der vierten Takt-Stellung müssen die beiden Formenträger 2a und 2b unter Beibehaltung des gegenseitigen Abstandes um den Abstand zweier zum gleichen Teilträger 27 gehörender Halterungen 6a und 6b weiter bewegt werden. Die Größe der Schlaufe im mittleren Schlaufenbildner 9 kann dabei unverändert bleiben. Der nachfolgende Formenträger 2b befindet sich mit seinen Ketten-Zapfen 29 dabei gerade noch im Bereich des Entladetrums 15, wie in Fig. 2d angestellt.

In den Figuren 2 ist ferner der Durchlauf eines Formenträgers 2x durch den oberen, doppelten Schlaufenbildner 10 dargestellt:

Während der ersten Takt-Stellung gemäß Fig. 2a befindet sich der Formenträger 2x bereits im oberen, vertikalen Bereich zwischen dem umlenkenden Antriebsritzel 52 und noch um eine solche Strecke vor dem oberen Schlaufenbildner 10, die größer ist als der Abstand zwischen den Halterungen 6a und 6b innerhalb desselben Teilträgers 27. Vom oberen, doppelten Schlaufenbildner 10 bildet in diesem Zustand der in Förderrichtung 20 erste Teil-Schlaufenbildner 10 a eine Schlaufe, der zweite Teil-Schlaufenbildner 10 b bildet dagegen gerade keine Schlaufe, da dieser gerade von dem vorhergehenden Formenträger 2w durchlaufen wird.

Bis zum Beginn der nächsten Takt-Stellung gemäß Fig. 2b nähert sich der Formenträger 2x dem oberen Schlaufenbildner 10 an, erreicht diesen jedoch noch nicht ganz. Während dessen hat jedoch der vorausgehende Formenträger 2w den Schlaufenbildner 10 vollständig verlassen und anschließend bereits der damit freie zweite Teil-Schlaufenbildner 10 b eine Schlaufe gebildet, und im gleichen Zuge der erste Teil-Schlaufenbildner 10 a die Größe seiner Schlaufe auf 0 reduziert, was durch Umsteuern der nicht darstellten, die oberen Tänzerräder 13 a, b beaufschlagenden, Pneumatikzylinder von Arbeitsdruck auf drucklos und umgekehrt geschah.

Damit kann in der nun folgenden dritten Takt-Stellung gemäß Fig. 2c der Formenträger 2x den ersten Teil-Schlaufenbildner 10 a gerade durchlaufen. Während dieses Durchlaufes verringert der zweite Teil-Schlaufenbildner 10 b die Größe seiner Schlaufe bereits auf Null, was erreicht ist, wenn die Ketten-Zapfen 29 des Formenträgers 2x in der vierten Takt-Stellung gerade den konstanten Tangenten-Punkt des mittleren, beiden Teil-Schlaufenbildner 10 a, b Landgemeinsamen, ortsfesten Umlenkritzels 54 erreicht hat gemäß Fig. 2d.

Während nun der erste Teil-Schlaufenbildner 10a eine Schlaufe aufbaut, wird der Zustand gemäß Fig. 2a erreicht, und der Zyklus kann erneut ablaufen.

Die in Fig. 2a nur angedeutete Ausrichteinheit 55 ist in Fig. 6 detaillierter dargestellt:

Durch die Ausrichteinheit soll beispielsweise folgende definierte Stellung der Formenträger 2 errreicht werden:
- die zweite Rotationsachse 23 soll waagerecht, also parallel zum hier ebenfalls waagerecht laufenden Kettenförderer 1 verlaufen,
- die Marken 37a,b soll sich dabei oberhalb des Kettenförderers 1 befinden (wodurch z.B. die Einfüllöffnungen der Formen 3 in Förderrichtung 20 nach rechts weisen) und
- die äußeren Führungsrollen 26 sollen sich unterhalb des Kettenförderers 1 seitlich abstrebend zu den Ketten 1a,b hin befinden (wodurch die Vorderkante der Formen 3 nach unten weist).

Beim Einlauf der Formenträger 2 in die Ausrichteinheit 55 wird die momentan unten liegende von beiden inneren Führungsrollen 36b von einer Auflaufschräge 62 erfaßt, die die Führungsrollen 36a,b zur Mitte, also auf das Niveau des Kettenförderers 1 und damit des Kettenzapfens 29b hin, leitet, was bereits einer waagerechten Lage der zweiten Rotationsachse 23 entspricht.

Durch anschliessende Überprüfung z.B. mittels einer Fotozelle, ob die um 90° versetzt zur Führungsrolle 36b angeordnete Marke 37 oberhalb oder unterhalb dieser Mitte liegt, und ggfs. ein Verschwenken des Formenträgers um die erste Rotationsachse 22 um 180°, wird der Formenträger mit seinen Einfüllöffnungen wie gewünscht, z.B. in Laufrichtung nach vorne, ausgerichtet.

Analog wird auf der anderen Seite des Formenträgers mit den Führungsrollen und Marken 36a, 37a verfahren, die die Schwenklage um die zweite Rotationsachse 23 anzeigen.

In dieser Lage wird der Formenträger durch parallel zum Kettenförderer 1 verlaufende innere Führungsschienen 35a,b gehalten.

Zur Überprüfung, ob die richtige Lage des Formenträgers 2, nämlich mit den Marken 37a,b oberhalb und nicht unterhalb der Ebene des Kettenförderers 1, gegeben ist, und ggf. der notwenigen Drehung des Formenträgers 2 um 180°, sind die Führungsschienen 35a,b über einen Längsabschnitt unterbrochen.

In diesem Bereich sind parallel zum Kettenförderer 1 hin versetzt Richtketten 58a,b endlos umlaufend angeordnet. Deren benachbart zum Kettenförderer 1 verlaufende Trume befinden sich in einem solchen Abstand hierzu, daß die Schwenkritzel 30, 31 mit diesen Richtketten 58 in Eingriff gelangen, bevor die vordere Führungsschiene 35a die Führungsrollen 36 freigibt.

An dieser Position wird mittels erster Sensoren 56 überprüft, ob sich die Marken 37 wie gewünscht oberhalb des Kettenförderers 1 befinden. Ist dies nicht der Fall, wird die entsprechende oder beide der Richtketten 58, die normalerweise mit ihrem dem Kettenförderer 1 benachbarten Trum synchron mit dem Kettenförderer mitläuft, stillgesetzt, bis ein in entsprechendem Abstand vom ersten Sensor 56 angeordneter zweiter Sensor 57 feststellt, daß sich die Marke 37a bzw. 37b nun in der gewünschten höchsten Position oberhalb des Kettenförderers 1 befindet.

Nach diesem zweiten Sensor 57 gelangen die Führungsrollen 36b wiederum in den Wirkungsbereich der entsprechenden Führungsschienen 35b, so daß nunmehr von den oben beschriebenen drei Bedingungen alle drei erfüllt sind.

Die Antriebe der unabhängigen Richtketten 58 erfolgen durch Abnahme der Fördergeschwindigkeit des Kettenförderers 1 über ein Abnahmeritzel 60, welches über eine Übertragungskette 63 das gleich große Antriebsritzel 59 der Richtkette 58 antreibt.

In diesem Antriebsstrang, vorzugsweise direkt im Antriebsritzel 59, ist eine nicht dargestellte Kupplung angeordnet, die mit den Sensoren 56, 57 wirkverbunden ist, so daß durch Aus- bzw. Einkuppeln die Richtkette 58 wahlweise synchron mit dem Kettenförderer 1 für eine Weiterförderung der Formenträger 2 in stabiler Lage angetrieben oder stillgesetzt zum Drehen der Schwenkritzel 31 und damit der Formenträger 2 werden kann.

### BEZUGSZEICHENLISTE

- 1: Kettenförderer
- 2: Formenträger
- 3: Formen
- 4: Unterteil
- 5: Oberteil
- 6: Halterung
- 7: Schwenkgetriebe
- 8: unterer Schlaufenbildner
- 9: mittlerer Schlaufenbildner
- 10: oberer, doppelter Schlaufenbildner
- 11: unteres Tänzerrad
- 12: mittleres Tänzerrad
- 13: oberes Tänzerrad
- 14: Arbeitstrum (a,b = Teilbereiche)
- 15: Entladetrum
- 16: Beladetrum
- 17: Ladestelle
- 18: Beladeposition
- 19: Entladeposition
- 20: Förderrichtung
- 21: Förderebene
- 22: 1. Rotationsachse
- 23: 2. Rotationsachse
- 24: a, b, c, d Führungsrolle
- 25: Pneumatikzylinder
- 26: Äußere Führungsrollen
- 27: Teilträger
- 28: Teilträger-Zapfen
- 29: Ketten-Zapfen
- 30: Schwenkritzel
- 31: Schwenkritzel
- 32: Schwenktrieb-Kette
- 33: Schwenktrieb-Kette
- 35: innere Führungsschienen
- 36: innere Führungsrollen
- 37: Marke
- 38: Transportbahn
- 39: Formhohlraum
- 40: Endloskette
- 41: Füllstation
- 42: Beladeschieber
- 43: Entladeschieber
- 44: Schieberschlitten
- 45: äußere Führungsschienen
- 46: Ablage-Mechanismus
- 47: Wendepunkt
- 48: Belüftungs-Gitter
- 49: Tragplatte
- 50: Antriebsritzel
- 51: Antriebsritzel
- 52: Antriebsritzel
- 53: Umlenkritzel
- 54: Umlenkritzel
- 55: Ausrichteinheit
- 56: 1. Sensor
- 57: 2. Sensor
- 58: Richtkette
- 59: Antriebsritzel
- 60: Abnahmritzel
- 61: Unterstützung
- 62: Auflaufschräge
- 63: Übertragungskette

## Patentansprüche

1. Verfahren zum Handhaben sowie Be- und Entladen der in einem Endlosförderer fest, aber frei drehbar aufgenommenen Formenträger, wobei
- die Formenträger insbesondere zur Aufnahme von Formen geeignet sind, die Formhohlräume zum Herstellen von hohlen Gegenständen aus erstarrender Flüssigkeit wie etwa heißer Schokolade aufweisen,
- der Endlosförderer wenigstens in seinem Arbeitstrum permanent läuft,
- einem im wesentlichen vertikal verlaufenden Ladetrum wenigstens eine im wesentlichen horizontal verlaufende Transportbahn für die Formen vorgeordnet ist,
**dadurch gekennzeichnet**, **daß**
- für das Be- und Entladen der Endlosförderer im Ladetrum für begrenzte Zeit angehalten wird durch
- Vergrößerung einer wenigstens ersten Schlaufe im Endlosförderer vor dessen Ladetrum mit einer Geschwindigkeit, die die momentane Geschwindigkeit des Endlosförderers im Arbeitstrum (14) (Arbeitsgeschwindigkeit) kompensiert und
- analoger Verkleinerung wenigstens einer letzten Schlaufe im Endlosförderer nach dessen Ladetrum mit der umgekehrt gleichen Geschwindigkeit wie der ersten Schlaufe.

2. Verfahren nach Anspruch 1,
**dadurch gekennzeichnet**, **daß**
die Schlaufen des Endlosförderers von den Formenträgern immer mit definierter Schwenklage der Formenträger durchlaufen werden.

3. Verfahren nach Anspruch 1 oder 2,
**dadurch gekennzeichnet**, **daß**
das Entladetrum (15) und das Beladetrum (16) unmittelbar aneinander anschließen und das Be- und Entladen im Bereich der mittleren Schlaufe durchgeführt wird.

4. Verfahren nach einem der vorhergehenden Ansprüche,
**dadurch gekennzeichnet**, **daß**
- jedes Trum über einen eigenen Antrieb verfügt und
- Beladetrum (16) und Entladetrum (15) so kurz wie möglich ausgebildet sind und am jeweiligen Ende jedes Trums in Förderrichtung der Antrieb für dieses Trum angeordnet ist.

5. Verfahren nach einem der vorhergehenden Ansprüche,
**dadurch gekennzeichnet**, **daß**
bei gleichzeitigem Be- und Entladen aus verschiedenen Formenträgern (2a, b) diese beiden Formenträger durch vorherige unterschiedliche Steuerung der Geschwindigkeiten von Beladetrum (16) und Entladetrum (15) mit ihren entsprechenden Halterungen (6a, b) auf Beladeposition (19) bzw. Entladeposition (18) gebracht werden.

6. Verfahren nach einem der vorhergehenden Ansprüche,
**dadurch gekennzeichnet**, **daß**
die Formenträger (2) um ihre erste und zweite Rotationsachse (22, 23) in Teilbereichen (14a, b) des Arbeitstrums (14) definiert rotierend bzw. schwenkend angetrieben werden und danach undefiniert um diese Rotationsachsen (22, 23) weiter rotieren, aber vor dem Erreichen des Ladetrums (14) eine definierte Schwenklage um beide Rotationsachsen hergestellt wird.

7. Vorrichtung zum Handhaben sowie Be- und Entladen der in einem Endlosförderer, insbesondere einem Kettenförderer, fest, aber frei drehbar aufgenommenen Formenträger, insbesondere zur Durchführung des Verfahrens nach einem der vorhergehenden Ansprüche, wobei
- die Formenträger insbes. zur Aufnahme von Formen geeignet sind, die Formhohlräume zum Herstellen von hohlen Gegenständen aus erstarrender Flüssigkeit wie etwa heißer Schokolade aufweisen,
- der Kettenförderer wenigstens in seinem Arbeitstrum permanent läuft,
- einem im wesentlichen vertikal verlaufenden Ladetrum eine im wesentlichen horizontal verlaufende Transportbahn für die Formen vorgeordnet ist,
**dadurch gekennzeichnet**, **daß**
- der Formenträger (2) ein Schwenkgetriebe (7) umfaßt, welches quer zwischen den beiden parallel laufenden Ketten des Kettenförderers (1) drehbar aufgenommen ist, wobei diese Querrichtung eine erste Rotationsachse (22) der Formenträger (2) bildet,
- aus dem Schwenkgetriebe (7) auf gegenüberliegenden Seiten rechtwinklig zur ersten Rotationsachse (22) Teilträger-Zapfen (28a,b) drehbar aus dem Schwenkgetriebe (7) hervorragen, die die zweite Rotationsachse (23) bilden, und
- an den Teilträger-Zapfen (28a,b) Teilträger (27a,b) drehfest angeordnet sind, die insbesondere parallel zu der ersten Rotationsachse (22) verlaufende Halterungen (6) zur Aufnahme der Formen (3) aufweisen,

8. Vorrichtung nach Anspruch7,
**dadurch gekennzeichnet**, **daß**
- koaxial zur ersten Rotationsachse (22) wenigstens ein Schwenkritzel ( 30, 31) am Schwenkgetriebe (7) angeordnet ist, so daß die Drehung des wenigstens einen Schwenkritzels (30) eine Drehung des Schwenkgetriebes (7) um die beiden Rotationsachsen (22, 23) bewirkt, und
- Schwenktrieb-Ketten (32, 33) mit jeweils einem Trum abschnittweise parallel zum Arbeitstrum (14) an der Vorrichtung zum Einwirken auf die Schwenk-Ritzel (30, 31) angeordnet sind.

9. Vorrichtung nach Anspruch 7 oder 8,
**dadurch gekennzeichnet**, **daß**
- am Schwenkgetriebe (7) beidseits und axial gegenüber den Kettenzapfen (29) zum Schwenkgetriebe (7) hin versetzt je ein Schwenkritzel (30, 31) angeordnet ist und
- die Drehung des einen Schwenkritzels (30) eine Drehung des Schwenkgetriebes (7) um die erste Rotationsachse (22) als auch eine Drehung der Teilträgerzapfen (28a, 28b) und der daran befestigten Teilträger (27a, 27b) um die zweite Rotationsachse (23) bewirkt, während die Drehung des anderen Schwenkritzels (31) eine Beeinflussung der Drehzahl der Drehung der Teilträgerzapfen (28a, 28b) mit den Teilträgern (27a, 27b) um die zweite Rotationsachse (23) bewirkt.

10. Vorrichtung nach einem der vorhergehenden Vorrichtungs-Ansprüche,
**dadurch gekennzeichnet**, **daß**
- sowohl aus dem Schwenkgetriebe (7), insbesondere aus dessen Schwenkritzeln (30, 31), seitlich, zur Kette hin, als auch aus wenigstens einem der Teilträger (27a,b) radial zur zweiten Rotationsachse hin äußere bzw. innere Führungsrollen (26) bzw. (36) vorstehen, und
- äußere (45) bzw. innere (35) Führungsschienen parallel zur Ebene der Ketten des Kettenförderers (1) abschnittweise zum Einwirken auf die Führungsrollen (26, 36) angeordnet sind.

11. Vorrichtung nach Anspruch 10,
**dadurch gekennzeichnet**, **daß**
die Führungsschienen (35, 45) im Bereich der Schlaufenbildner (8, 9) entsprechend einer Schlaufengröße Null verlaufen.

12. Vorrichtung nach Anspruch 10,
**dadurch gekennzeichnet**, **daß**
die Führungsschienen (35, 45) im Bereich der Schlaufenbildner (8, 9) flexibel ausgebildet und mit der Lagerung für das jeweilige Tänzerrad (11, 12, 13) verbunden sind.

13. Vorrichtung nach einem der vorhergehenden Vorrichtungs-Ansprüche,
**dadurch gekennzeichnet**, **daß**
die Formenträger (2) Halterungen (6) für eine variable Anzahl und variablen Abstand von Formen (3) innerhalb eines Formenträgers (2) aufweisen.

14. Vorrichtung nach einem der vorhergehenden Vorrichtungs-Ansprüche,
**dadurch gekennzeichnet**, **daß**
die in Förderrichtung (20) ersten Schlaufenbildner (8) der getakteten, unmittelbar aneinander anschließenden Trume des Kettenförderers (1) als einfache und die in Förderrichtung letzten Schlaufenbildner (20) als doppelte Schlaufenbildner (10) ausgebildet sind.

15. Vorrichtung nach Anspruch 14,
**dadurch gekennzeichnet**, **daß**
- der Kettenförderer (1) wenigstens ein Beladetrum (16), ein Arbeitstrum (14) sowie ein Entladetrum (15) umfaßt,
- der untere, zwischen Arbeitstrum (14) und Entladetrum (15) angeordnete, untere Schlaufenbildner (8) sowie der mittlere, zwischen Entladetrum (15) und Beladetrum (16) angeordnete Schlaufenbildner (9) als einfache Schlaufenbildner (10) ausgebildet sind und
- der obere, zwischen Beladetrum (16) und Arbeitstrum (14) angeordnet, obere Schlaufenbildner (10) als doppelter Schlaufenbildner ausgebildet ist.

16. Vorrichtung nach einem der vorhergehenden Vorrichtungs-Ansprüche,
**dadurch gekennzeichnet**, **daß**
- die einfachen Schlaufenbildner je zwei in Förderrichtung beabstandete, ortsfeste Umlenkritzel aufweisen, zwischen denen ein auf der gegenüberliegenden Seite der Kette angeordnetes Tänzerrad (11, 12) quer zur Förderebene (21) gegen den Kettenförderer (1) bewegbar ist mittels eines Pneumatikzylinders (25),
- die Pneumatikzylinder (25) unabhängig voneinander wahlweise mit Arbeitsdruck beaufschlagt oder drucklos geschaltet werden können.

17. Vorrichtung nach einem der vorhergehenden Vorrichtungs-Ansprüche,
**dadurch gekennzeichnet**, **daß**
- das Entladetrum (15) und das Beladetrum (16) i.w. vertikal verlaufen und das Arbeitstrum (14) im wesentlichen horizontal verläuft mit wenigstens zwei übereinander verlaufenden Teilbereichen (14 a, b), sodaß kein funktionsloses Rücktrum notwendig ist, und
- die im wesentlichen parallel zueinander verlaufenden Teilbereiche (14a bzw. 14b) thermisch voneinander getrennt sind.

18. Vorrichtung nach einem der vorhergehenden Vorrichtungs-Ansprüche,
**dadurch gekennzeichnet**, **daß**
die Ausrichteinheit (55)
- Auflaufschrägen (62a,b) zum Verschieben der inneren Führungsrollen (36a, 36b) in einen definierten Abstand zum Kettenförderer (1) umfaßt sowie
- Richtketten (58a,b), die wenigstens mit einem Trum in einem solchen Abstand parallel zu einer Kette des Kettenförderers (1) verläuft, daß in diesem Trum die Schwenkritzel (30) bzw. (31) der Formenträger (2) im Eingriff mit den Richtketten (58a,b) sind, wobei die Richtketten (58a,b) unabhängig voneinander wahlweise in diesem Trum synchron mit dem Kettenförderer (1) antreibbar oder demgegenüber mit einer Relativgeschwindigkeit beaufschlagbar sind sowie
- wenigstens einem Sensor (56a,b, 57a,b), welcher die Lage einer Marke (37a,b) relativ zum Kettenförderer (1) feststellt und durch Ansteuerung der Richtkette (58) eine Beibehaltung oder Lageveränderung der Marke (37) während des Transportes des Formenträgers (2) entlang der Ausrichteinheit (55) bewirkt.
